# EUROPÄISCHE PATENTANMELDUNG

(11) **EP 1 157 993 A2**
(43) Veröffentlichungstag der Anmeldung: **28.11.2001**
(21) Anmeldenummer: 01111197.8
(22) Anmeldetag: 11.05.2001
(51) Int. Cl.: C07F 7/02

(54) **Frisch gefälltes CuO als Katalysator für die Trialkoxysilan-Synthese**

(30) Priorität: 23.05.2000 DE 10025367
(71) Anmelder: BASF AKTIENGESELLSCHAFT, 67056 Ludwigshafen (DE)
(72) Erfinder: Brand, Alexandra, Dr., 64291 Darmstadt (DE)
(74) Vertreter: Isenbruck, Günter, Dr.

(57) **Zusammenfassung**

Die Erfindung betrifft ein Verfahren zur Herstellung von Trialkoxysilanen durch Umsetzung von Siliziummetall mit einem Alkohol in einem inerten Lösungsmittel in Anwesenheit eines Kupferkatalysators, wobei der Kupferkatalysator Kupfer(II)oxid mit einer BET-Oberfläche von ≥ 10 m²/g enthält. Des weiteren betrifft die Erfindung die Verwendung dieses Kupferkatalysators zur Herstellung von Trialkoxysilanen durch Umsetzung von Siliziummetall mit einem Alkohol.

## Beschreibung

Die Erfindung betrifft ein Verfahren zur Herstellung von Trialkoxysilanen durch die Umsetzung von Siliziummetall mit einem Alkohol an einem Kupferkatalysator, insbesondere an Kupferoxid sowie die Verwendung von Kupferoxid in einem Verfahren zur Herstellung von Trialkoxysilanen.

Trialkoxysilane, aufgebaut aus einem Siliziumatom, an das drei Alkoxygruppen und ein Wasserstoffatom gebunden sind, sind sehr reaktiv und instabil. Sie gehen daher zahlreiche Reaktionen wie Additionen, Copolymerisationen, Copolykondensationen und Disproportionierungsreaktionen mit anderen organischen Verbindungen ein, wobei eine Reihe sehr nützlicher Substanzen erhalten werden. Diese dienen wiederum als Ausgangsprodukte für Silan-Kupplungsreagentien, Beschichtungsmittel, hitzeresistente Lacke oder zur Gewinnung von Monosilanen in hoher Reinheit für Halbleiteranwendungen.

Die Trialkoxysilane können über die direkte Umsetzung von Siliziummetall mit den entsprechenden Alkoholen bei Temperaturen von 150 bis 500°C unter Einsatz von kupferhaltigen Katalysatoren hergestellt werden (Direktsynthese). Dabei wird im allgemeinen die kupferhaltige Silizium-Kontaktmasse in einem inerten, flüssigen Reaktionsmedium suspendiert und bei Temperaturen von 150 bis 300°C durch Einleiten von flüssigem oder gasförmigem Alkohol zu den gewünschten Trialkoxysilanen umgesetzt. Bezüglich des Umsatzes an Siliziummetall und der Selektivität des Trialkoxysilans gegenüber dem als Nebenprodukt stehenden Tetraalkoxysilan hat sich Kupfer(I)-Chlorid als besonders geeigneter Katalysator gezeigt.

M. Okamoto et al., Catalysis Lett. 1995, 33, 421 bis 427 betrifft eine Untersuchung der Umsetzung von Siliziummetall mit Methanol in einem Silizium-Festbettreaktor an verschiedenen Kupferkatalysatoren. Es wurden die Kupferkatalysatoren Kupfer(I)oxid, Kupfer(II)oxid, Kupfer(II)acetat, Kupfer(II)formiat, Kupfer(II)phthalat, Kupfer(II)oxalat und Kupfer(I)chlorid verglichen. Dabei wurden für Kupfer(I)chlorid die höchsten Siliziumumsätze (88 %) und Selektivitäten für Trimethoxysilan gegenüber Tetramethoxysilan (98 %) gefunden.

Bei Einsatz von Kupfer(I)chlorid entsteht jedoch Salzsäure, die die Verwendung von teuren, korrosionsstabilen Materialien für die eingesetzten Reaktoren erforderlich macht. Des weiteren führt die Anwesenheit von Chlorid in der Reaktionsmischung und im Produkt zu einer Ausbeuteverminderung an Trialkoxysilan, da die Folgereaktion von Trialkoxysilan mit Alkoholen zu Tetraalkoxysilan durch Chlorid katalysiert wird. Die bei Einsatz von Kupfer(I)chlorid als Katalysator entstehende Salzsäure kann, bei Einsatz von Methanol als Alkohol, mit dem Methanol zu Methylchlorid und Wasser reagieren, wodurch Methanol als Ausgangsmaterial für die Trialkoxysilansynthese verlorengeht.

Aus diesen Gründen ist der Einsatz von halogenfreien Katalysatoren wünschenswert.

JP-A-05170773 betrifft die Herstellung von Trialkoxysilanen durch Umsetzung von Siliziummetall mit Alkohol in Anwesenheit von Kupferalkoxiden. Dabei werden halogenidfreie Produkte erhalten. Die Selektivität dieser Umsetzung beträgt 91 bis 92 %, die Umsetzung von Silizium beträgt jedoch lediglich 21 bis 32,4 %.

Eine Erhöhung der Selektivität und des Siliziumumsatzes wird bei dieser Umsetzung gemäß JP-A-06065257 durch Einsatz eines Kupferalkoxid-Katalysators in Kombination mit einem Metallhalogenid erreicht. Die Anwesenheit von Halogenid in der Reaktionsmischung und im Reaktionsprodukt hat jedoch die oben genannten Nachteile.

EP-A-0285133 betrifft die Herstellung von Trialkoxysilanen durch Umsetzung von Siliziummetall mit Alkoholen, wobei ein Kupfer(II)hydroxid-Katalysator eingesetzt wird. Bei dieser Umsetzung werden Siliziumumsätze von etwa 80 bis 90 mol-% erreicht und der Anteil an Tetraalkoxysilanen im Reaktionsgemisch beträgt etwa 5 bis 10 mol-%, bezogen auf das Silizium.

JP-A-10168084 betrifft die Herstellung von Trialkoxysilanen durch Umsetzung von Siliziummetall und Alkohol an einem Kupfer(II)oxid-Katalysator, der einen Wassergehalt von < 3000 ppm aufweist. Bei der Herstellung von Triethoxysilan wird ein Selektivitätskoeffizient für Trialkoxysilan von 85,2 mol-% und ein Siliziumumsatz von 91 Gew.-% erreicht. Der geringe Wassergehalt des eingesetzten Katalysators kann jedoch eine thermische Vorbehandlung des Katalysators und somit einen zusätzlichen Reaktionsschritt erfordern.

Aufgabe der vorliegenden Erfindung ist die Bereitstellung eines Kupferkatalysators für die Trialkoxysilansynthese, der eine hohe Selektivität für Trialkoxysilan gegenüber Tetraalkoxysilan und hohe Umsätze ermöglicht, ohne daß die, Anwesenheit von Halogenid erforderlich ist, und der bei Wassergehalten des Katalysators im Prozentbereich aktiv ist. Es soll auf eine zeitaufwendige Voraktivierung zur Generierung einer katalytische aktiven Spezies verzichtet werden.

Die Lösung der Aufgabe geht aus von einem Verfahren zur Herstellung von Trialkoxysilanen durch Umsetzung von Siliziummetall mit einem Alkohol in einem inerten Lösungsmittel in Anwesenheit eines Kupferkatalysators.

Das erfindungsgemäße Verfahren ist dann dadurch gekennzeichnet, daß der Kupferkatalysator Kupfer(II)oxid mit einer BET-Oberfläche von ≥ 10 m²/g enthält.

Vorzugsweise weist das in dem erfindungsgemäßen Verfahren eingesetzte Kupfer(II)oxid eine BET-Oberfläche von 10 bis 50 m²/g auf, besonders bevorzugt von 20 bis 40 m²/g.

Die BET-Oberfläche wurde nach DIN 66131 bestimmt.

Durch das erfindungsgemäße Verfahren werden hohe Siliziumumsätze und sehr gute Selektivitäten an Trialkoxysilan im Verhältnis zu Tetraalkoxysilan erreicht. Im allgemeinen werden Siliziumumsätze bei Reaktionsende von > 75 mol-% erreicht, bevorzugt von 80 bis 90 mol-%, besonders bevorzugt von 82 bis 90 mol-%. Dabei wird der Siliziumumsatz gemäß der folgenden Gleichung ermittelt: Si[mol] im Produkt/eingesetzte Siliziummenge.

Die Selektivität an Trialkoxysilan gegenüber Tetraalkoxysilan ist im allgemeinen größer als 80 mol-%, bevorzugt 85 bis 90 mol-%. Dabei wird die Selektivität gemäß der folgenden Gleichung ermittelt: Trialkoxysilan[mol]/(Trialkoxysilan[mol] + Tetraalkoxysilan[mol]) * 100. Eine Aktivierung des erfindungsgemäß eingesetzten Katalysators durch Reduktion oder durch eine thermische Behandlung bei hohen Temperaturen ist nicht erforderlich.

Der Wassergehalt der erfindungsgemäß eingesetzten Kupfer(II)oxide kann im allgemeinen größer als 5 Gew.-% sein. Ein wesentlicher Einfluß des Wassergehaltes der Kupfer(II)oxidkatalysators auf die Ergebnisse der Reaktion wurde nicht festgestellt.

Bei dem erfindungsgemäß eingesetzten Kupfer(II)oxid handelt es sich bevorzugt um frisch gefälltes Kupfer(II)oxid. Besonders bevorzugt besteht das frisch gefällte Kupfer(II)oxid im wesentlichen aus nadelförmigen Blättchen mit einer Länge von ≤ 200 nm. Bevorzugt weisen die nadelförmigen Blättchen eine Länge von 20 bis 200 nm auf, besonders bevorzugt von 20 bis 100 nm. Die Teilchengröße wurde mittels Transmissionselektronen-Mikroskopie (TEM) durchgeführt.

Die Teilchengrößenverteilung des erfindungsgemäß eingesetzten Kupfer(II)oxids ist im allgemeinen sehr eng.

In einer bevorzugten Ausführungsform wird das frisch gefällte Kupfer(II)oxid durch Umsetzung von Kupfer(II)-Salzen mit Natronlauge, KOH oder Ca(OH)₂ und anschließendes Trocknen gewonnen, wobei Kupfer(II)oxid im Gemisch mit Fremdsalzen erhalten wird.

Dabei sind unter Fremdsalzen die bei der Umsetzung als Nebenprodukte entstehenden Salze, entsprechend den eingesetzten Kupfersalzen, zu verstehen.

Üblicherweise weist das so hergestellte Kupfer(II)oxid einen Fremdsalzgehalt von im allgemeinen 0 bis 20 Gew.-%, bevorzugt von 0 bis 5 Gew.-% auf. Das Fremdsalz wirkt sich im allgemeinen nicht störend auf die Umsetzung von Siliziummetall mit Alkohol zu Trialkoxysilan aus. Es ist jedoch zu beachten, daß bei Einsatz von Kupferchloriden als Kupfer(II)-Salzen Natriumchlorid als Fremdsalz erhalten wird, jedoch üblicherweise in sehr untergeordneten Mengen, was für die Korrosionsproblematik keine Rolle mehr spielt.

Als Kupfer(II)-Salze werden bevorzugt Kupfer(II)chlorid, CuSO₄, CuBr₂, Cu(NO₃)₂, Cu-Acetat, CuCO₃, Cu(CN)₂ und/oder basisches Cu-Carbonat eingesetzt, wobei Kupfer(II)chlorid und CuSO₄ besonders bevorzugt sind.

Es ist möglich, den Fremdsalzgehalt in dem erfindungsgemäßen Verfahren eingesetzten Kupfer(II)-Katalysators durch Waschen des frisch gefällten Kupfer(II)-oxids mit einem geeigneten Lösungsmittel vor dem Trocknen des Produkts zu kontrollieren. So kann durch Waschen des frisch gefällten Kupfer(II)oxids mit Wasser und anschließendes Trocknen ein im wesentlichen fremdsalzfreies Produkt erhalten werden. Dabei ist unter im wesentlichen fremdsalzfrei ein Fremdsalzgehalt von ≤ 2 Gew.-%, bezogen auf Kupfer(II)oxid, bevorzugt von 0 bis 1 Gew.-%, besonders bevorzugt von 0 bis 0,5 Gew.-% zu verstehen.

Das Trocknen des frisch gefällten Kupfer(II)oxids erfolgt im allgemeinen über einen Zeitraum von 0,5 bis 8 Stunden, bevorzugt von 0,5 bis 3 Stunden, besonders bevorzugt von 0,5 bis 1 Stunde. Die Temperatur des Trocknens beträgt im allgemeinen Raumtemperatur bis 150°C, bevorzugt 60 bis 120°C, besonders bevorzugt 90 bis 110°C. Die Trocknung kann auch bei reduziertem Druck durchgeführt werden. Es wird jedoch auch dann ein in dem erfindungsgemäßen Verfahren aktiver Kupfer(II)oxid-Katalysator erhalten, wenn die Trocknung des frisch gefällten Kupfer(II)oxids nach Waschen des Kupfer(II)oxids mit Methanol oder einem anderen leichtflüchtigen Lösungsmittel, bei Raumtemperatur durch Verdampfung des Methanols oder des anderen leichtflüchtigen Lösungsmittels erfolgt.

Die BET-Oberfläche und die Teilchengröße der erfindungsgemäß eingesetzten Kupfer(II)oxid-Katalysatoren sind von der Trocknungstemperatur und -dauer sowie der Konzentration der eingesetzten Lösungen und der Zulaufgeschwindigkeit und damit Fällgeschwindigkeit abhängig.

In Tabelle 1 ist der Chloridgehalt, die BET-Oberfläche und die Kristallitgröße von erfindungsgemäß eingesetzten frisch gefällten Kupfer(II)oxid-Katalysatoren (Proben 1 bis 3) sowie von technischen, käuflichen Kupferoxiden (Proben 4, 5) dargestellt.

**Tabelle 1**

| CuO-Analysen | Zusammensetzung | | | | | Herstellung | BET-Oberfläche | Kristalline Bestandteile | Kristallitgrößen |
|---|---|---|---|---|---|---|---|---|---|
| Proben-Nummer | Cu | Cl | O | H | Na | | m²/g | | (nm) |
| 1 | 68 | 5,3 | 23,1 | 1,1 | 3,5 | frisch | 36,7 | Tenorit, NaCl | 10,5 |
| 2 | 65 | 8,3 | 18,5 | 0,5 | 6,4 | frisch, 24 h, 100°C,N₂ | 24,4 | Tenorit, NaCl | 13,3 |
| 3 | 76,5 | 0,63 | 21,6 | 0,6 | 0,01 | frisch, gewaschen, 24 h, 100°C | 25,7 | Tenorit | 13,2 |
| 4 | 80 | 0,01 | 19,9 | 0,5 | 0,003 | gekörnt | 2,3 | Tenorit | |
| 5 | 80 | 0,5 | 19,2 | 0,5 | 0,003 | gepulvert | 3,8 | Tenorit | |

Das technische, käufliche Kupfer(II)oxid (Tenorit) wird üblicherweise durch Umsetzung von elementarem Kupfer mit Ammoniak, Ammoniumcarbonat und Luft mit anschließender Dampfeinleitung oder Druckverkochung unter Freisetzung von Kohlendioxid und Ammoniak gebildet. Aufarbeitung kann jedoch auch mittels starker Alkalien erfolgen, die in situ Kupferhydroxid fällen, das durch Kochen der Lösung in Kupfer(II)oxid überführt wird.

Die Daten in Tabelle 1 zeigen, daß das erfindungsgemäß eingesetzte frisch gefällte Kupfer(II)oxid ein wesentlich größere BET-Oberfläche aufweist als technisches, käufliches Kupfer(II)oxid. Des weiteren ist die BET-Oberfläche von frisch gefälltem Kupfer(II)oxid, das lediglich mit Methanol gewaschen und anschließend an Luft bei Raumtemperatur durch Verdampfung von Methanol getrocknet wurde, größer als die von frisch gefälltem Kupfer(II)oxid, das bei 100°C getrocknet wurde (Proben 2 und 3).

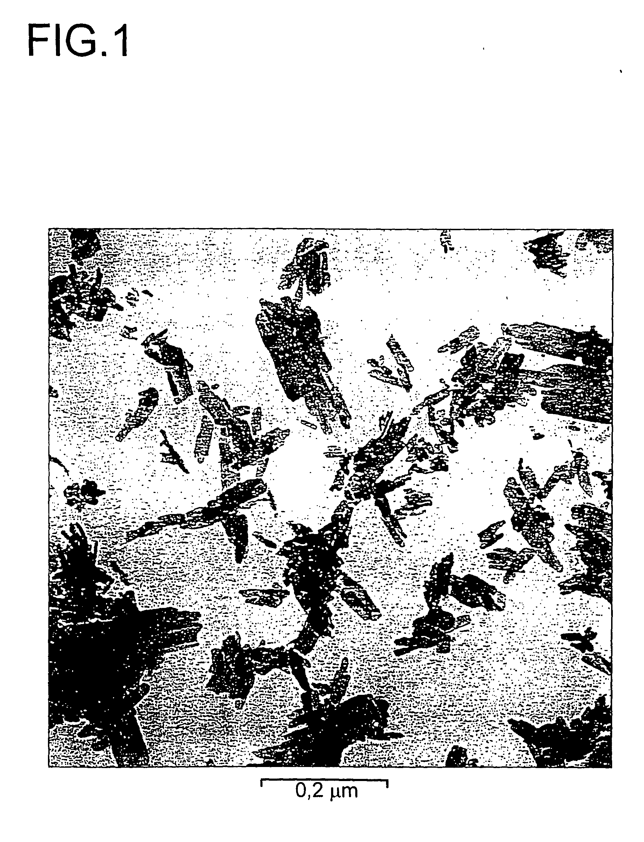

Die anliegende Zeichnung zeigt in den Fig. 1 bis 4 TEM-Aufnahmen (Transmissionselektronen-Mikroskopie) von frisch gefälltem Kupfer(II)oxid, wie es gemäß der vorliegenden Erfindung eingesetzt wird, sowie im Vergleich dazu die Aufnahmen von technischem, käuflichem Kupfer(II)oxid. Der Maßstab ist unter der jeweiligen Figur angegeben.
- Fig. 1 zeigt:: frisch gefälltes Kupfer(II)oxid, das nach Waschen mit Methanol an Luft bei Raumtemperatur durch Verdampfung von Methanol getrocknet wurde (Probe 1, Tabelle 1),
- Fig. 2 zeigt:: frisch gefälltes Kupfer(II)oxid, das Wasser-gewaschen wurde und 24 h bei 100°C getrocknet wurde (Probe 3, Tabelle 1); dieses Kupfer(II)oxid ist im wesentlichen halogenfrei,
- Fig. 3 zeigt:: käufliches, gekörntes Kupfer(II)oxid (Probe 4, Tabelle 1),
- Fig. 4 zeigt:: käufliches, gepulvertes Kupfer(II)oxid (Probe 5, Tabelle 1).

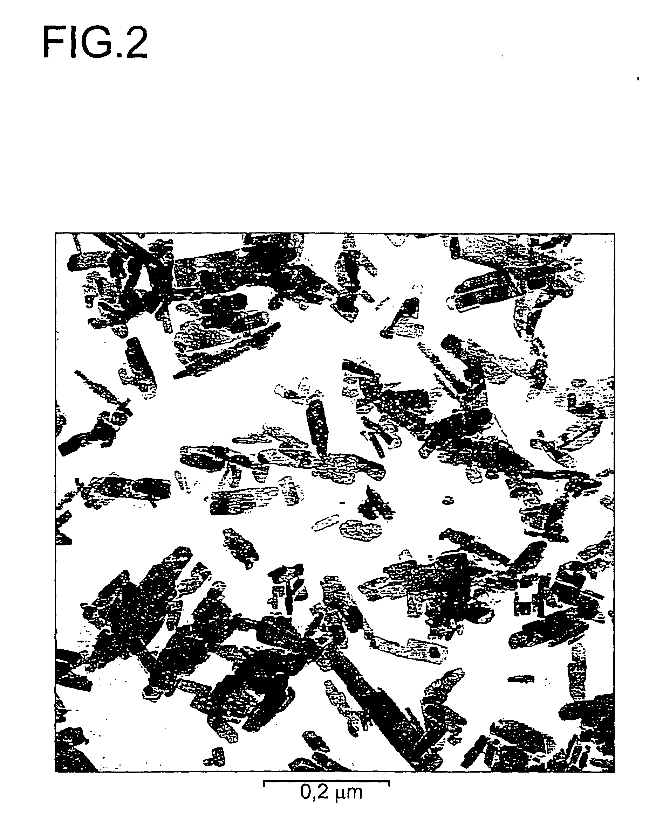

In den Figuren 1 und 2 erkennt man, daß die frisch gefällten Salze aus nadelförmigen, flachen Plättchen mit Abmessungen zwischen 20 nm und 200 nm bestehen. Die Kristallitgröße der bei 100°C getrockneten Probe (Probe 3, Fig. 2) ist im Mittel geringfügig größer als die der Probe 1 (Fig. 1). Der Gesamtanteil an kristallinen Phasen ist in Probe 3 (Fig. 2) größer als in Probe 1 (Fig. 1), woraus sich auch die größere mittlere Kristallitgröße ergibt.

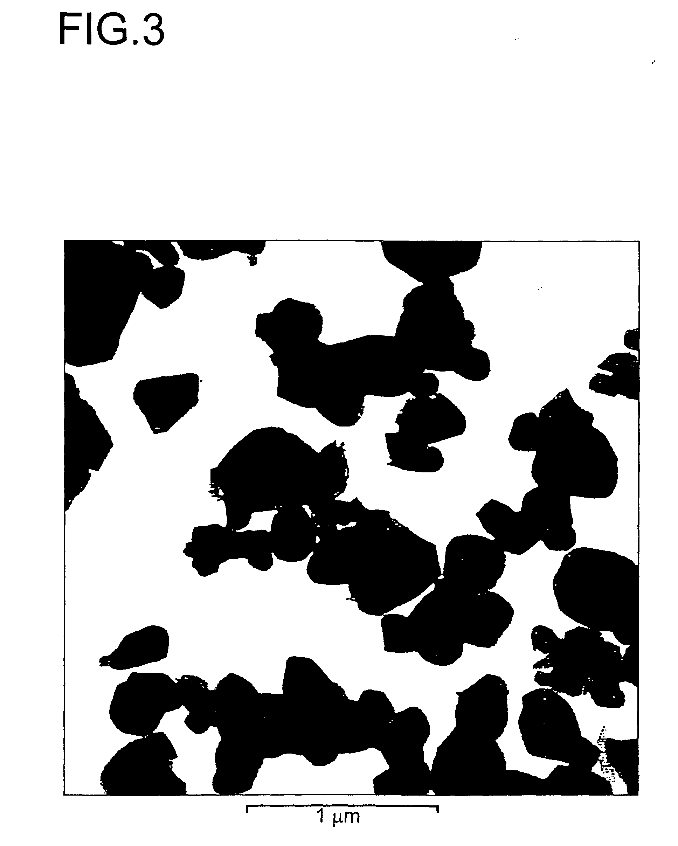

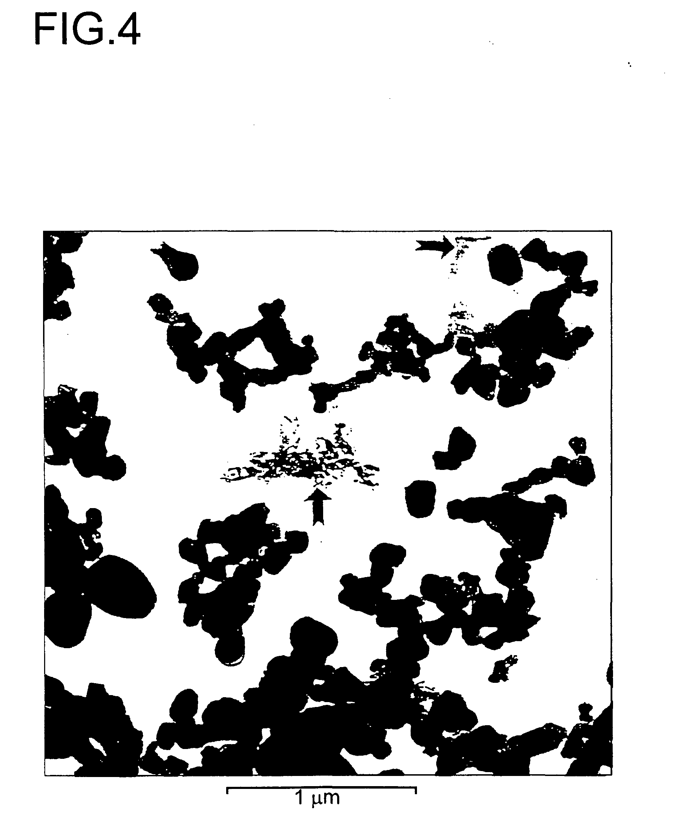

Fig. 3 und Fig. 4 ist zu entnehmen, daß die technischen Salze eine deutliche größere Kristallitgröße von 20 nm bis zu 9 µm aufweisen und eine sehr heterogene Teilchengrößenverteilung zeigen. Die Teilchen sind kugelförmig und zeigen einen großen kristallinen Anteil. In der gepulverten Probe (Probe 5, Fig. 4) werden zusätzlich nadelförmige Anteile gefunden, die stark verwachsen vorliegen.

Neben hohen Siliziumumsätzen und einer sehr guten Selektivität an Trialkoxysilan im Verhältnis zu Tetraalkoxysilan zeichnet sich das erfindungsgemäße Verfahren durch sehr gute Produktbildungsraten aus.

Die Menge an eingesetztem Kupfer(II)oxid in dem erfindungsgemäßen Verfahren ist variabel. Im allgemeinen werden 0,0001 bis 0,05 mol, bevorzugt von 0,0005 bis 0,005 mol, besonders bevorzugt 0,001 bis 0,005 mol des Katalysators pro mol Siliziummetall eingesetzt.

Der in dem erfindungsgemäßen Verfahren eingesetzte Alkohol ist im allgemeinen ein einwertiger Alkohol. Bevorzugt wird ein Alkohol ROH eingesetzt, worin R eine Alkylgruppe mit 1 bis 6 Kohlenstoffatomen darstellt. Dabei kann die Alkylgruppe verzweigt oder unverzweigt sein, bevorzugt ist sie unverzweigt. Bevorzugt weist die Alkylgruppe des eingesetzten Alkohols 1 bis 3 Kohlenstoffatome auf, besonders bevorzugt werden Methanol oder Ethanol eingesetzt, ganz besonders bevorzugt wird Methanol eingesetzt, so daß das ganz besonders bevorzugt hergestellte Produkt Trimethoxysilan ist. Üblicherweise wird der Alkohol flüssig oder gasförmig in eine Reaktionsmischung aus Reaktionsmedium, Siliziummetall und Katalysator eingeleitet.

Der Alkohol wird im allgemeinen kontinuierlich im Überschuß zu dem vorgelegten Siliziummetall zudosiert (sogenanntes Semibatch-Verfahren). Dabei hängt das genaue Verhältnis von Alkohol zu Siliziummetall unter anderem von der gewünschten Aufarbeitungsweise ab, da manchmal ein zu hoher MeOH-Gehalt im Produkt vermieden werden muß.

Als Siliziummetall kann grundsätzlich jedes kommerziell erhältliche Produkt eingesetzt werden. Eine typische, für das erfindungsgemäße Verfahren geeignete, Zusammensetzung eines kommerziellen Produktes enthält etwa > 98 bis 99 Gew.-% Si, < 1 Gew.-% Fe, etwa 0,05 bis 0,7 Gew.-% Al, etwa 0,001 bis 0,1 Gew.-% Ca, < 0,001 Gew.-% Pb und < 0,1 Gew.-% Wasser. Übliche durchschnittliche Korndurchmesser betragen 45 bis 600 µm, bevorzugt 75 bis 300 µm. Im allgemeinen sind kleine Quandurchmesser des Siliziummetalls bevorzugt, da sie einfacher zu dispergieren sind und schneller reagieren.

Für das erfindungsgemäße Verfahren geeignete inerte Lösungsmittel sind thermisch stabile Lösungsmittel, die sich unter den für das erfindungsgemäße Verfahren notwendigen hohen Temperaturen nicht zersetzen. Bevorzugte Lösungsmittel sind hochtemperaturstabile organische Lösungsmittel, die üblicherweise als Wärmeaustauschmedien genutzt werden. Die Art des eingesetzten Lösungsmittels beeinflußt die Umsetzung von Siliziummetall mit Alkohol an Kupferkatalysatoren erheblich. Bevorzugt geeignete Lösungsmittel sind Therminol® 59, Therminol® 60, Therminol® 66, Dowtherm® HT, Marlotherm® S, Marlotherm® L, Diphenylether, Diphenyl, Terphenyl und alkylierte Benzole, alkylierte Diphenyle und alkylierte Terphenyle sowie Reaktionsmedien, die Diphenylalkane enthalten, wie sie gemäß der nicht vorveröffentlichten deutschen Anmeldung mit dem Aktenzeichen 19962571.9 offenbart sind. Die genannten Lösungsmittel weisen Siedepunkte bei Normaldruck auf, die höher als etwa 250°C sind. Unter Therminol® 59 ist dabei ein Produkt der Monsanto Company zu verstehen, wobei es sich (gemäß Sicherheitsdatenblatt ) um ein Gemisch auf Diphenylethan, Ethyldiphenylethan, Diethyldiphenylethan und Ethylbenzol handelt. Therminol® 60 ist eine Mischung aus polyaromatischen Verbindungen mit einem mittleren Molekulargewicht von 250. Die optimale Verwendungstemperatur von Therminol® 60 liegt im Bereich von -45 bis 315°C. Therminol® 66 und Dowtherm® HT sind Mischungen von hydrierten Terphenylen mit einem mittleren Molekulargewicht von 240. Ihre obere Temperaturgrenze liegt bei etwa 370°C.

Marlotherm® S, Produkt der Hüls AG, ist eine Mischung isomerer Dibenzylbenzole und Marlotherm® L, Produkt der Hüls AG, ist eine Mischung isomerer Benzyltoluole. Besonders geeignete Lösungsmittel sind Therminol® 59, Therminol® 66, Marlotherm® S, Marlotherm® L sowie alkylierte Benzole, Tri- und Tetratoluole sowie Reaktionsmedien, die Diphenylalkane enthalten.

Die Alkylketten der Diphenylalkane haben im allgemeinen eine Kettenlänge von 3 bis 20 Kohlenstoffatomen, bevorzugt von 10 bis 14 Kohlenstoffatomen. Die Alkylketten können linear oder verzweigt sein. Bevorzugt werden Diphenylalkane mit linearen Alkylketten eingesetzt. Aus Preisgründen wird besonders bevorzugt ein Gemisch von Diphenylalkanen mit Alkylketten von 10 bis 14 Kohlenstoffatomen als Reaktionsmedium eingesetzt.

Die Menge des verwendeten Lösungsmittels ist variabel. Normalerweise wird aus Kostengründen eine Zusammensetzung Silizium : Lösungsmittel zwischen 2:1 und 1:4, bevorzugt zwischen 2 : 1 und 1 : 2 angestrebt.

Ein Restgehalt von organischen Chlorverbindungen im Reaktionsmedium beeinträchtigt die Umsetzung nicht wesentlich. Dabei können Restgehalte von im allgemeinen 0 bis 10000 ppm, bevorzugt von 1 bis 1000 ppm, besonders bevorzugt von 100 bis 500 ppm, bezogen auf das Reaktionsmedium, im Reaktionsmedium vorhanden sein. Diese organischen Chlorverbindungen haben keine erhöhte Korrosivität des Reaktionsmediums zur Folge.

Der Wassergehalt des Reaktionsmediums hat in kleineren Grenzen keinen Einfluß auf die Reaktion. Üblich sind Wassergehalte von 0 bis 1000 ppm, bevorzugt von 1 bis 100 ppm, besonders bevorzugt von 10 bis 50 ppm, bezogen auf das Reaktionsmedium. Größere Mengen an Wasser, welches z.B. durch den Alkohol eingetragen werden kann, äußern sich jedoch störend.

Die Umsetzung erfolgt im allgemeinen bei Temperaturen von 150 bis 300°C, bevorzugt von 180 bis 300°C. Eine Temperaturerhöhung führt dabei in einigen Fällen bei sonst gleichen Reaktionsbedingungen zu einer Verbesserung der Selektivität, d.h. zu einer Verbesserung des Verhältnisses von Trialkoxysilan zu dem als unerwünschtes Nebenprodukt entstehenden Tetraalkoxysilan. Der Reaktionsdruck ist nicht kritisch. Üblicherweise wird die Umsetzung bei Normaldruck durchgeführt.

In einer Ausführungsform des erfindungsgemäßen Verfahrens werden das inerte Lösungsmittel, das Siliziummetall und der Kupfer(II)oxid-Katalysator in einen Reaktor gefüllt. Die Mischung wird im allgemeinen auf die gewünschte Reaktionstemperatur aufgeheizt und der Alkohol wird flüssig oder gasförmig in die Mischung eingeleitet. Nach Beendigung der Reaktion kann das Reaktionsmedium durch Filtration zurückgewonnen und wieder eingesetzt werden. Während der Reaktion kann in bestimmten Zeitabständen Siliziummetall nachdosiert werden. Dabei kann gleichzeitig Katalysator nachdosiert werden. Wird kein Katalysator nachdosiert, kann eine unkritische, geringfügige Abnahme der Reaktivität der Mischung festgestellt werden. Auf diese Weise kann mindestens die zehnfach Dosierung, bevorzugt die zehn- bis fünfzehnfache Dosierung des Siliziummetalls in Bezug auf die erste Dosierung in dem eingesetzten Reaktionsmedium umgesetzt werden.

Ein weiterer Gegenstand der vorliegenden Erfindung ist die Verwendung von Kupfer(II)oxid mit einer BET-Oberfläche von ≥ 10 m²/g als Katalysator zur Herstellung von Trialkoxysilanen durch Umsetzung von Siliziummetall mit einem Alkohol.

Die nachfolgenden Beispiele erläutern die Erfindung zusätzlich.

### Beispiele

### Herstellung von Kupfer(II)oxid

In einem 250 ml-Rührkolben werden 20 g Kupfer(II)chlorid vorgelegt und in 26 g Wasser gelöst. 23,8 g einer 50 %-igen Natronlauge werden schnell zugetropft. Die schwarze Suspension wird 1 h unter Rückfluß gekocht und abgesaugt. Der Feststoff wird einmal mit 250 ml Wasser aufgeschlämmt und abgesaugt. Der Rückstand wird nun 24 h bei 100°C unter Stickstoff getrocknet. Auf diese Weise erhält man Probe Nr. 2 (Tabelle 1).

Wird der nach Rückfluß erhaltene Rückstand zweimal mit je 250 ml Wasser aufgeschlämmt und abgesaugt, wird nach der gleichen Trocknungsprozedur Probe 3 erhalten.

Probe 1 erhält man durch Aufschlämmen des abgesaugten Rückstands mit 300 ml MeOH und nochmaligem Absaugen.

### Herstellung von Trimethoxysilan

Allgemeine Vorschrift für alle im folgenden aufgeführten Beispiele:

500 ml Lösungsmittel, 200 g metallisches Silizium (durchschnittlicher Korndurchmesser 200 µm, Siliziumgehalt > 98 %) und ca. 0,005 Gew.-%, bezogen auf das Siliziummetall des Kupfer(II)oxid-Katalysators werden in einen 500 ml-Glasreaktor gefüllt. Der Reaktor ist mit einem Thermometer, Kühler, Rührer und Einleitungsrohr für den Alkohol und für Stickstoff ausgestattet. Die Reaktionsmischung wird auf die in Tabelle 2 angegebene Reaktionstemperatur aufgeheizt, und Methanol wird flüssig zudosiert. Kurz nach dem Beginn der Methanoleinleitung beginnt an dem Kühler Produkt zu kondensieren. Die Zusammensetzung des Produkts wird mittels Gaschromatographie analysiert.

Um eine Vergleichbarkeit der Ergebnisse zu ermöglichen, wurde auf eine einheitliche Reaktionszeit von 22,5 h bilanziert. Zusätzlich wurde auch die Bilanz bis Reaktionsende betrachtet (nach 23 und 28 h, Methanol-Gehalt des Produkts 100 %). Der Reaktionsaustrag besteht aus einer rötlich-braunen Suspension, die filtriert wird. Das zurückerhaltene Lösungsmittel kann wieder eingesetzt werden.

Die Tabelle 2 zeigt die Reaktionsparameter und Versuchsergebnisse von erfindungsgemäßen Beispielen und Vergleichsbeispielen:

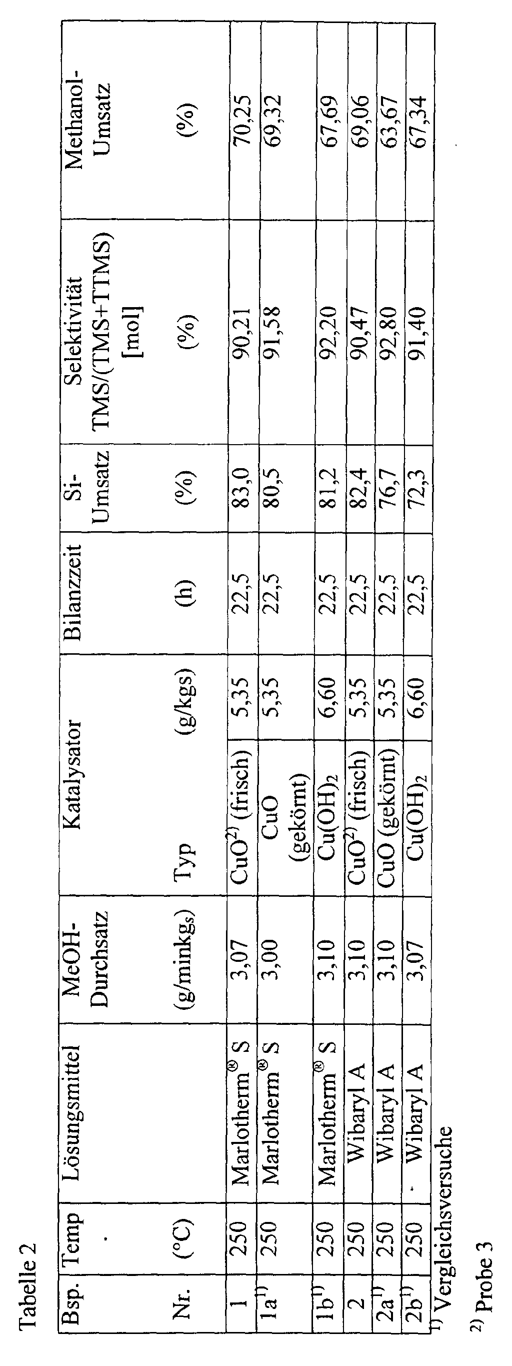

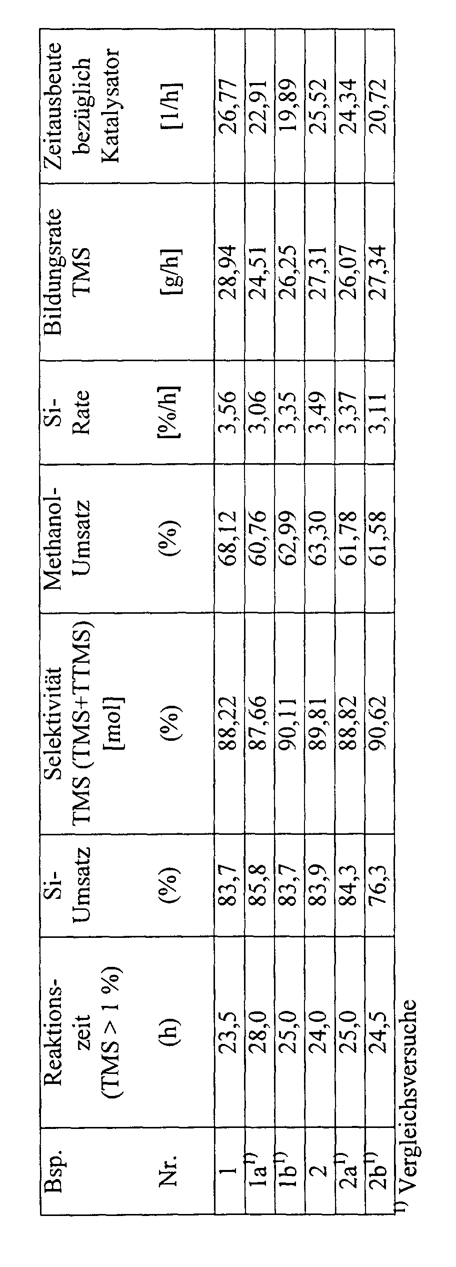

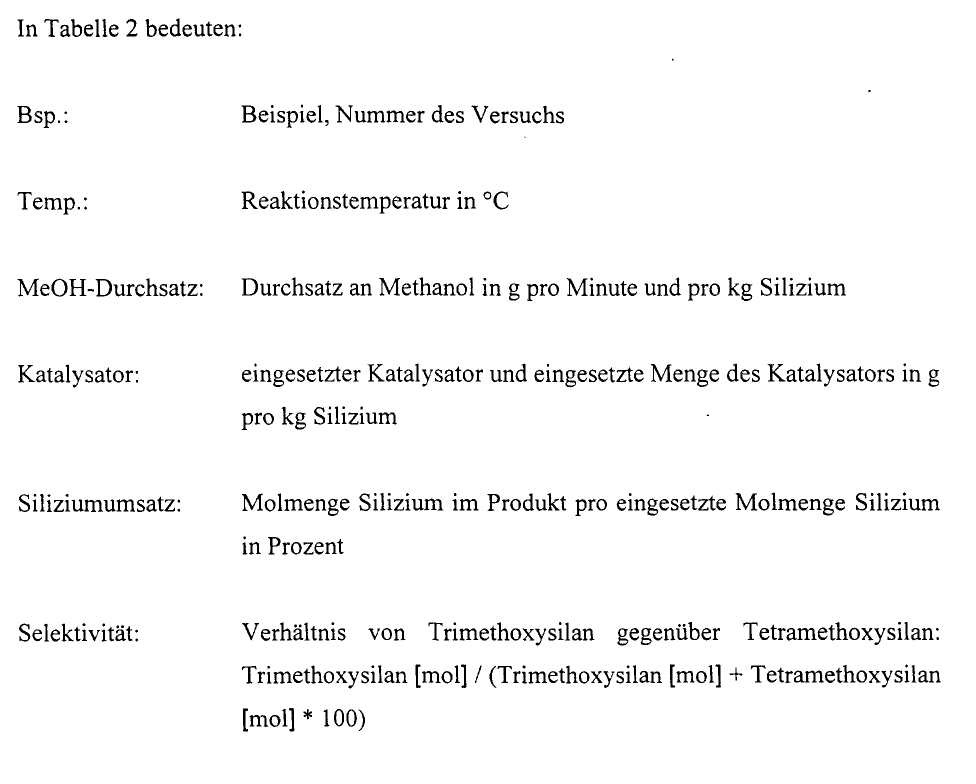

### Produktbildungsraten bei Einsatz eines erfindungsgemäß eingesetzten Katalysators sowie Vergleichsbeispiele

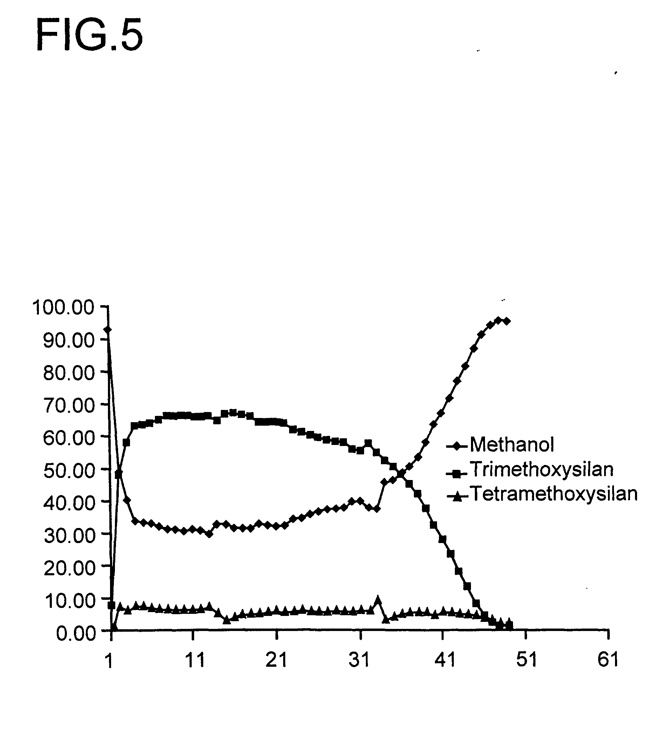

In der anliegenden Zeichnung zeigen die Figuren 5 bis 7 den Methanol-Umsatz (Rauten), die Bildungsrate an Trimethoxysilan (Quadrate) und die Bildungsrate an Tetramethoxysilan (Dreiecke) bei der Umsetzung von Siliziummetall mit Alkoholen an verschiedenen halogenfreien Kupferkatalysatoren in Marlotherm® S.
Fig. 5 zeigt die Umsetzung und Produktbildungsraten bei Einsatz eines erfindungsgemäßen Kupfer(II)oxid-Katalysators, Probe 3, Tabelle 1;

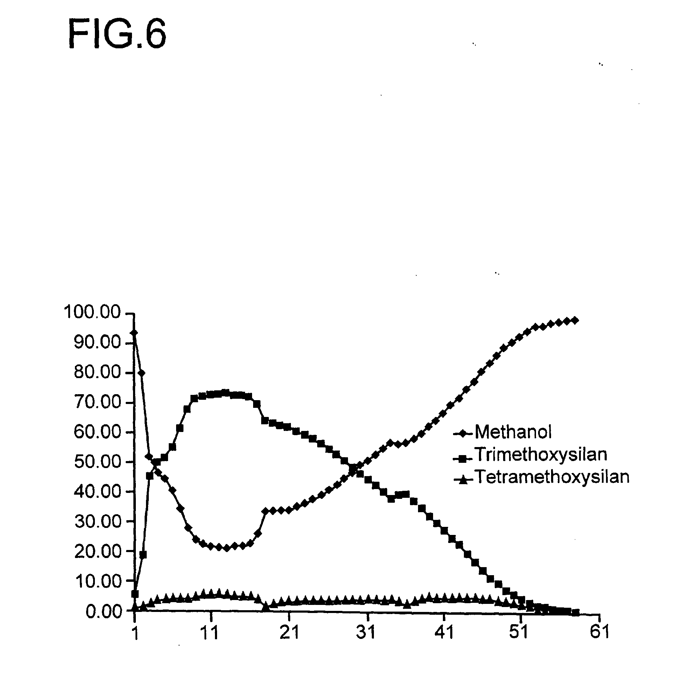

Fig. 6 zeigt den Methanol-Umsatz und die Produktbildungsraten bei Einsatz eines gekörnten, käuflichen Kupfer(II)oxid-Katalysators als Vergleichsbeispiel, entsprechend dem Beispiel 1a gemäß Tabelle 2;

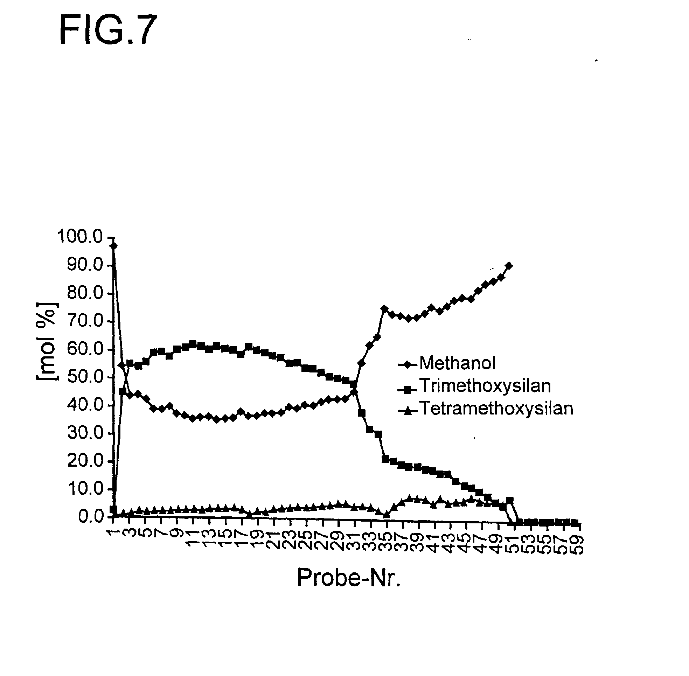

Fig. 7 zeigt den Methanol-Umsatz und die Produktbildungsraten bei Einsatz eines Kupfer(II)hydroxid-Katalysators als Vergleichsbeispiel gemäß Beispiel 1b in Tabelle 2.

Aus den Figuren 5 bis 7 geht hervor, daß sich mit frisch gefälltem Kupfer(II)oxid deutlich größere Produktbildungsraten erzielen lassen als bei Einsatz von technischem Kupfer(II)oxid bzw. Kupfer(II)hydroxid, bei vergleichbaren Selektivitäten und Siliziumausbeuten. Dabei ist keine Voraktivierung des erfindungsgemäß eingesetzten Katalysators im Reaktor notwendig. Dieser Effekt ist unabhängig vom verwendeten Lösungsmittel, wie Beispiel 2, sowie die Vergleichsbeispiele 2a und 2b, gemäß Tabelle 2 zeigen.

## Patentansprüche

1. Verfahren zur Herstellung von Trialkoxysilanen durch Umsetzung von Siliziummetall mit einem Alkohol in einem inerten Lösungsmittel in Anwesenheit eines Kupferkatalysators, **dadurch gekennzeichnet, daß** der Kupferkatalysator Kupfer(II)oxid mit einer BET-Oberfläche von ≥ 10 m²/g enthält.

2. Verfahren nach Anspruch 1, **dadurch gekennzeichnet, daß** das Kupfer(II)oxid eine BET-Oberfläche von 10 bis 50 m²/g aufweist.

3. Verfahren nach Anspruch 1 oder 2, **dadurch gekennzeichnet, daß** das Kupfer(II)oxid frisch gefälltes Kupfer(II)oxid ist.

4. Verfahren nach einem der Ansprüche 1 bis 3, **dadurch gekennzeichnet, daß** das Kupfer(II)oxid im wesentlichen aus nadelförmigen Blättchen mit einer Länge von < 200 nm besteht.

5. Verfahren nach Anspruch 3 oder 4, **dadurch gekennzeichnet, daß** das frisch gefällte Kupfer(II)oxid durch Umsetzung von Kupfer(II)-Salzen mit Natronlauge und anschließendes Trocknen gewonnen wird, wobei Kupfer(II)oxid im Gemisch mit Fremdsalzen erhalten wird.

6. Verfahren nach Anspruch 5, **dadurch gekennzeichnet, daß** der Fremdsalzgehalt des eingesetzten Kupfer(II)oxid-Katalysators durch Waschen des frisch gefällten Kupfer(II)oxids vor dem Trocknen mit einem geeigneten Lösungsmittel kontrolliert werden kann.

7. Verfahren nach einem der Ansprüche 1 bis 6, **dadurch gekennzeichnet, daß** ein Alkohol ROH eingesetzt wird, worin R eine Alkylgruppe mit 1 bis 6 Kohlenstoffatomen darstellt.

8. Verfahren nach Anspruch 7, **dadurch gekennzeichnet, daß** der Alkohol Methanol ist.

9. Verfahren nach einem der Ansprüche 1 bis 8, **dadurch gekennzeichnet, daß** das inerte Lösungsmittel ausgewählt ist aus Therminol® 59, Therminol® 66, Marlotherm® S, Marlotherm® L, alkylierten Benzolen, Tri- und Tetratoluolen sowie Reaktionsmedien, enthaltend Diphenylalkane.

10. Verwendung von Kupfer(II)oxid mit einer BET-Oberfläche von ≥ 10 m²/g als Katalysator zur Herstellung von Trialkoxysilanen durch Umsetzung von Siliziummetall mit einem Alkohol.
